# FASCICULE DE BREVET EUROPEEN

(11) **EP 1 853 749 B1**
(45) Date de publication et mention de la délivrance du brevet: **26.09.2018**
(21) Numéro de dépôt: 06726208.9
(22) Date de dépôt: 01.03.2006
(51) Int. Cl.: C23C 18/12, C23C 18/14, C23C 18/00, G02B 1/10, C03C 17/36

(54) **PROCEDE DE PREPARATION D'UNE SOLUTION SOL-GEL ET UTILISATION DE CETTE SOLUTION POUR CONSTITUER UN REVETEMENT POUR PROTEGER UN SUBSTRAT A SURFACE METALLIQUE**
VERFAHREN ZUR HERSTELLUNG EINER SOL-GEL-LÖSUNG UND VERWENDUNG DAVON ZUR HERSTELLUNG EINES SCHUTZÜBERZUGS AUF EINEM METALLSUBSTRAT
METHOD FOR PREPARING A SOL-GEL SOLUTION AND USE THEREOF TO FORM A METAL SUBSTRATE PROTECTIVE COATING

(30) Priorité: 01.03.2005 FR 0550538
(43) Date de publication de la demande: 14.11.2007
(73) Titulaire: Commissariat à l'Énergie Atomique et aux Énergies Alternatives, 75015 Paris (FR)
(72) Inventeur: BEAURAIN, Laurence, 37260 Artannes S/Indre (FR); PRENE, Philippe, F-37200 Tours (FR); MONTOUILLOUT, Yves, F-45130 Le Bardon (FR); BELLEVILLE, Philippe, F-37000 Tours (FR)
(74) Mandataire: Ahner, Philippe
(86) Numéro de dépôt international: PCT/FR2006/050184
(87) Numéro de publication internationale: WO 2006/092536

(56) Documents cités:
- EP-A- 0 818 561
- US-B1- 6 387 453
- US-B1- 6 540 844
- MEI CAI, MANKIT HO, JEANNE E. PEMBERTON: "Surface vibrational Spectroscopy of alkylsilane layers covalently bonded to monolayers of (3-mercaptopropyl)trimethoxysilane on Ag substrates" LANGMUIR, vol. 16, no. 7, 2002, pages 3446-3453, XP002351399

## Description

### DOMAINE TECHNIQUE

L'invention concerne un procédé de préparation d'une solution sol-gel stable précurseur d'un matériau de revêtement de protection pour un substrat à surface métallique.

L'invention concerne également une solution sol-gel stable susceptible d'être obtenue par ce procédé.

Cette solution sol-gel trouve notamment son application pour concevoir un revêtement sur un substrat métallique, afin d'améliorer la résistance à la corrosion et à l'oxydation d'une telle surface. Plus précisément, cette solution sol-gel est particulièrement efficace pour concevoir des revêtements sur un substrat à base d'argent, telle que l'on en rencontre dans les miroirs argentés utilisés par exemple dans les collecteurs solaires ou encore dans les réflecteurs de lampe.

### ÉTAT DE LA TECHNIQUE ANTÉRIEURE

Les substrats métalliques, et en particulier à base d'argent, tels que les miroirs, sont très sensibles à la présence dans l'atmosphère d'impuretés, telles que le sulfure de dihydrogène (H₂S), l'acide chlorhydrique (HCl) ou encore l'ozone (O₃). Ces impuretés provoquent notamment à long terme le ternissement de ces surfaces et une dégradation de leurs performances optiques dans le temps.

Dans l'art antérieur sont décrits de nombreux procédés destinés à protéger des substrats, tels que les miroirs, de ces signes de vieillissement.

Ainsi, les spécialistes des revêtements ont pensé protéger de tels substrats en les revêtant d'une couche en un métal ou alliage métallique moins sensible aux impuretés environnementales que l'argent et altérant le moins possible les propriétés optiques de celui-ci.

Parmi ces techniques de revêtement par métallisation, on peut citer le chromatage consistant à recouvrir le substrat à base d'argent à traiter d'une pellicule de chrome, en plongeant ledit substrat dans des bains aqueux de composés de chrome. Toutefois, cette technique n'est plus très utilisée à l'heure actuelle du fait des restrictions d'utilisation des composés chimiques à base de chrome imposées par les réglementations environnementales.

On peut citer, en variante, des techniques de dépôt de revêtement à base de métaux nobles tels que l'or ou de métaux non nobles tels que l'étain, le rhodium, le cuivre, le zinc ou des mélanges de ceux-ci. Ainsi, le document US 5, 614, 327 décrit le dépôt par galvanoplastie sur un substrat en argent d'un revêtement en alliage à base de cuivre, d'étain et de zinc.

Toutefois, en dépit de l'excellente résistance de ces revêtements métalliques vis-à-vis des impuretés corrosives de l'environnement, ces revêtements génèrent des pertes importantes des propriétés optiques de l'argent, notamment en terme de réflectivité spéculaire, en particulier dans le domaine UV-visible.

Afin de contourner les inconvénients découlant de l'utilisation de revêtements métalliques, certains auteurs ont eu l'idée de revêtir des surfaces à base d'argent à protéger d'un revêtement en matériau organique transparent. Ainsi, le document US 4,645,712 décrit le dépôt d'un revêtement à base d'un polymère acrylique. Un tel dépôt s'est avéré toutefois instable dans le temps, notamment sous flux lumineux intense.

Pour remédier au problème de stabilité dans le temps, il a été envisagé dans l'art antérieur d'utiliser des revêtements en céramique oxyde déposés par des procédés physiques de dépôts sous vide, plus communément désignés par la terminologie PVD (pour « Physical Vapor Deposition »). C'est le cas notamment du document US 3,687,713 qui décrit le dépôt par PVD d'un revêtement à base d'alumine et de silice. Cependant, le dépôt de revêtement en céramique oxyde par PVD nécessite un équipement lourd et ne peut être mis en oeuvre sur des supports de grande dimension et/ou de forme complexe.

C'est la raison pour laquelle les procédés de dépôt par voie «chimie douce» et en particulier les procédés de dépôts par voie sol-gel sont apparus comme une alternative intéressante aux procédés physiques de dépôt sous-vide. Les procédés de dépôts par voie sol-gel présentent par rapport aux procédés mentionnés ci-dessus un certain nombre d'avantages parmi lesquels on peut mentionner le dépôt d'une solution précurseur du revêtement généralement réalisé à température ambiante et à pression atmosphérique sans recourir à une étape de traitement thermique à des températures élevées, un dépôt envisageable sur les substrats de formes les plus diverses ou de grandes dimensions.

Un exemple d'utilisation de la technique sol-gel pour réaliser un revêtement pour substrat argenté est donné dans la demande de brevet EP 0818561, dans laquelle, dans un premier temps, une solution sol-gel est préparée par dissolution dans un solvant alcoolique d'un précurseur moléculaire de silicium et éventuellement d'un précurseur moléculaire d'aluminium, ou de titane. Dans un deuxième temps, la solution sol-gel est déposée sur un substrat à protéger et traitée thermiquement à une température allant de 500 à 700°C.

D1 (US 6,387,453) décrit un procédé de préparation de couches minces comprenant les étapes suivantes :
- une étape de mélange d'un précurseur de sol de silice, d'un solvant, d'un surfactant et d'un composé interstitiel pour former un sol de silice ;
- une étape d'évaporation d'une partie du solvant pour former une mésophase à cristaux liquides ;
- une étape de chauffage de ladite mésophase pour éliminer le surfactant.

D2 (US 6,540,844) décrit un procédé de préparation d'une couche d'interface permettant la fixation d'une résine liquide sur une surface métallique à partir d'une solution sol-gel.

Cette couche d'interface est obtenue par dépôt sur la surface métallique d'un composé alcoxyde métallique comprenant au moins un atome de soufre labile et d'un composé alcoxyde métallique comprenant au moins un groupe réactif apte à se lier avec la résine organique.

D3 (Langmuir, vol. 16, n°7, 2002, p-3446-3453) décrit la préparation de substrats en argent dont la surface est modifiée par des composés silanes.

Le procédé décrit comprend :
- une première étape de fixation sur le substrat en argent d'une monocouche d'un composé organomercaptosilane (le 3-mercaptopropyl-triméthoxysilane) ;
- une deuxième étape de greffage de composés alkylsilanes (par exemple, octadécyltrichlorosilane et diméthylchlorooctadécylsilane) sur la monocouche préalablement déposée).

D4 (EP-A-0 818 561) décrit un procédé de fabrication de revêtements en divers oxydes en utilisant le procédé sol-gel, ces revêtements étant notamment destinés à des substrats en argent, les solutions sol-gel étant préparées à partir d'alcoxydes, sans qu'il soit évoqué l'utilisation de composés mercaptoorganosilanes.

Toutefois, les procédés sol-gel pour déposer des revêtements pour des substrats à base d'argent, mis au point jusqu'à présent, ont révélé de nombreux inconvénients, parmi lesquels l'on peut citer:
- l'instabilité dans le temps des solutions sol-gel utilisées pour le dépôt, ce qui est incompatible avec l'utilisation de telles solutions dans un contexte industriel ;
- des températures de traitement des solutions sol-gel en vue de les transformer en céramique beaucoup trop élevées, pouvant altérer la stabilité dimensionnelle des substrats de dépôt et incompatibles avec des substrats intrinsèquement sensibles à des traitements thermiques à haute température ;
- des propriétés des matériaux obtenus après densification desdites solutions insatisfaisantes du point de vue optique, notamment au niveau de la tenue de ces matériaux aux flux lumineux ;
- des propriétés des matériaux obtenus après densification desdites solutions insatisfaisantes du point de vue de la résistance chimique, empêchant un nettoyage répété desdits matériaux par des agents lessivants classiques et une exposition de ces matériaux à un environnement pollué;
- des propriétés des matériaux obtenus après densification desdites solutions insatisfaisantes du point de vue mécanique, lesdits revêtements présentant notamment une mauvaise adhésion à la surface argentée sur laquelle ils sont déposés.

L'invention a donc pour but de surmonter les inconvénients de l'art antérieur mentionné plus haut et de fournir notamment un procédé de préparation d'une solution sol-gel, dont les conditions opératoires seront choisies de telle sorte à permettre à l'issue du procédé l'obtention d'une solution sol-gel stable dans le temps, de manière à rendre ce procédé applicable au niveau industriel.

La solution sol-gel susceptible d'être obtenue par ce procédé, outre ses propriétés de stabilité dans le temps, permet après traitement d'obtenir un matériau de revêtement, en particulier, pour un substrat à base d'argent, qui présente :
- une bonne adhérence sur ledit substrat;
- une bonne résistance chimique vis-à-vis des polluants environnementaux, tels que les composés soufrés, et des agents de lavage classiquement utilisés pour nettoyer les surfaces;
- des propriétés optiques qui n'amoindrissent pas celles du substrat sous-jacent.

L'invention a enfin pour but un procédé de préparation d'un matériau de revêtement présentant les avantages mentionnés ci-dessus et au matériau obtenu par ce procédé.

### EXPOSÉ DE L'INVENTION

Ainsi, l'invention a trait, selon un premier objet, à un procédé de préparation d'une solution sol-gel stable comprenant successivement les étapes suivantes :
a) préparer une solution sol-gel par mise en contact d'un ou plusieurs précurseurs moléculaires de métal et/ou de métalloïde avec un milieu comprenant un solvant organique;
b) ajouter à la solution obtenue en a) au moins un composé mercaptoorganosilane ;
c) hydrolyser la solution obtenue en b) ;
d) ajouter à la solution obtenue en c) un ou plusieurs agents complexants choisis parmi :
   - les acides carboxyliques de formule R¹-COOH dans laquelle R¹ représente un groupe alkyle, linéaire ou ramifié, comprenant de 1 à 30 atomes de carbone, de préférence de 1 à 10 atomes de carbone, ou un groupe phényle ;
   - les β-dicétones de formule R²-COCH₂CO-R³, dans laquelle R² et R³ représentent indépendamment un groupe alkyle, linéaire ou ramifié, comprenant de 1 à 30 atomes de carbone, ou un groupe phényle ;
   - les hydroxamates de formule R⁴-CO-NHOH, dans laquelle R⁴ représente un groupe alkyle comprenant de 1 à 30 atomes de carbone, de préférence de 1 à 10 atomes de carbone, ou un groupe phényle.

Le procédé de l'invention permet avantageusement d'obtenir une solution sol-gel stable, c'est-à-dire une solution sol-gel présentant une viscosité stable dans le temps. Grâce à ces conditions opératoires soigneusement choisies, la solution sol-gel obtenue par le procédé de l'invention peut être utilisée comme solution commerciale, destinée à être utilisée ultérieurement en vue d'être transformée en un matériau hybride organique/inorganique. Du fait de sa stabilité à long terme, la solution sol-gel obtenue à l'issue de ce procédé permet d'obtenir, après traitement, des matériaux hybrides organiques/inorganiques présentant des propriétés identiques à partir d'une même solution utilisée à différents stades de vieillissement.

En premier lieu, le procédé de l'invention comprend une étape de préparation d'une solution sol-gel par mise en contact d'un ou plusieurs précurseurs moléculaires de métal et/ou de métalloïde avec un milieu comprenant un solvant organique.

Le métal peut être choisi dans un groupe constitué par les métaux de transition, les métaux lanthanides et les métaux dits post-transitionnels des colonnes IIIA et IVA de la classification périodique des éléments. L'élément métallique de transition peut être choisi parmi Ti, V, Cr, Mn, Fe, Co, Ni, Cu, Zn, Y, Zr, Nb, Mo, Ru, Rh, Pd, Ag, Cd, Hf, Ta, W, Re, Os, Ir, Pt). L'élément lanthanide peut être choisi parmi La, Ce, Pr, Nd, Sm, Eu, Gd, Tb, Dy, Er, Yb. L'élément métallique post-transitionnel peut être choisi parmi les éléments du groupe IIIA Al, Ga, In et Tl et les éléments du groupe IVA Ge, Sn et Pb.

L'élément métalloïde est choisi avantageusement parmi Si, Se, Te.

Il peut s'agir également de toutes combinaisons entre métaux de transition, métaux lanthanides, métaux post-transitionnels et métalloïdes.

Les précurseurs moléculaires de métal ou de métalloïde peuvent se présenter sous forme de sels inorganiques de métal ou métalloïde tels que des halogénures (fluorures, chlorures, bromures, iodures), des nitrates ou des oxalates.

Les précurseurs moléculaires de métal ou de métalloïde peuvent se présenter également sous forme de composés organométalliques de métal ou métalloïde, tels que :
- des alcoxydes répondant à la formule (RO)ₙM, dans laquelle M désigne le métal ou le métalloïde, n représente le nombre de ligands liés à M, ce nombre correspondant également au degré d'oxydation de M et R représente un groupe alkyle, linéaire ou ramifié, pouvant comporter de 1 à 10 atomes de carbone ou un groupe phényle ;
- des composés organométalliques répondant à la formule suivante :

   X_{y}R⁵_{z}M

   dans laquelle :
   - M représente un métal ou métalloïde ;
   - X représente un groupe hydrolysable, tel qu'un groupe halogène, un groupe acétate, un groupe acétonate, un groupe acrylate, un groupe acétoxy, un groupe acryloxy, un groupe alcoolate OR' avec R' représentant un groupe alkyle, linéaire ou ramifié, comprenant de 1 à 10 atomes de carbone, ou un groupe phényle ;
   - R⁵ représente un ligand issu :
      * d'un composé carboxyle de formule R⁶-COOH avec R⁶ représentant un groupe alkyle, linéaire ou ramifié, comprenant de 1 à 30 atomes de carbone, de préférence de 1 à 10 atomes de carbone, ou un groupe phényle ;
      * d'un composé β-dicétone R⁷-CO-CH₂-CO-R⁸ avec R⁷ et R⁸, identiques ou différents, représentant un groupe alkyle, linéaire ou ramifié, comprenant de 1 à 30 atomes de carbone, de préférence de 1 à 10 atomes de carbone, ou un groupe phényle ;
      * d'un composé phosphonate de formules R⁹-PO(OH)₂, R¹⁰-PO(OR¹¹) (OH) ou R¹²-PO(OR¹³)(OR¹⁴) dans lesquelles R⁹, R¹⁰, R¹¹, R¹², R¹³ et R¹⁴ identiques ou différents, représentent un groupe alkyle, linéaire ou ramifié, comprenant de 1 à 30 atomes de carbone, de préférence de 1 à 10 atomes de carbone, ou un groupe phényle ;
      * d'un composé hydroxamate de formule R¹⁵-CO(NHOH) dans laquelle R¹⁵ représente un groupe alkyle, linéaire ou ramifié, comprenant de 1 à 30 atomes de carbone, de préférence de 1 à 10 atomes de carbone, ou un groupe phényle ;
      * d'un composé organosilane, d'un composé sulfonate, d'un composé borate ou d'un composé de formule HO-R¹⁶-OH, dans laquelle R¹⁶ représente un groupe alkylène, linéaire ou ramifié, comprenant de 1 à 30 atomes de carbone, de préférence de 1 à 10 atomes de carbone, ou un groupe phénylène ;
   - x et y étant des entiers choisis de manière à ce que (x+y) soit égale à la valence de M.

De préférence, les précurseurs de métal ou de métalloïde sont des alcoxydes de métal ou de métalloïde.

En particulier, lorsque le métalloïde est du silicium, le précurseur de silicium peut être un alcoxyde de silicium, tel que le tétraéthylorthosilicate Si(OCH₂CH₃)₄ ou le tétraméthylorthosilicate Si(OCH₃)₄.

Les précurseurs moléculaires de métal ou de métalloïde, tels que décrits ci-dessus, sont mis en contact avec un milieu comprenant un solvant organique, de manière à former une solution sol-gel.

De préférence, le solvant organique est choisi parmi :
- les monoalcools aliphatiques ou aromatiques, saturés ou insaturés, de formule R¹⁷-OH, dans laquelle R¹⁷ représente un groupe alkyle, linéaire ou ramifié,comprenant de 1 à 30 atomes de carbone, de préférence de 1 à 10 atomes de carbone ou un groupe phényle ;
- les diols de formule HO-R¹⁸-OH, dans laquelle R¹⁸ représente un groupe alkylène, linéaire ou ramifié, comprenant de 1 à 30 atomes de carbone, de préférence de 1 à 10 atomes de carbone, ou un groupe phénylène.

A titre d'exemples de diols, on peut citer l'éthylène glycol, le diéthylène glycol ou encore le triéthylèneglycol.

Dans le cas où le précurseur moléculaire est un précurseur moléculaire de silicium, le solvant préféré utilisé pour dissoudre ce précurseur et former une solution sol-gel, est l'éthanol.

Selon l'invention, une fois que la solution sol-gel est préparée selon l'étape a), l'on y ajoute un composé mercaptoorganosilane répondant avantageusement à la formule suivante :

(HS-R¹⁹)_{x'}SiR²⁰_{y}'X¹_{(4-x'-y')}

dans laquelle :
- R¹⁹ représente un groupe hydrocarboné divalent, linéaire ou ramifié, comprenant de 1 à 30 atomes de carbone, de préférence de 1 à 10 atomes de carbone, ou un groupe phénylène ;
- R²⁰ représente un groupe hydrocarboné monovalent, linéaire ou ramifié, comprenant de 1 à 30 atomes de carbone, de préférence de 1 à 10 atomes de carbone
- X¹ représente un groupe hydrolysable choisi parmi un halogène, un acétonate, un acrylate, un alcoolate de formule OR²¹ dans laquelle R²¹ représente un groupe alkyle comprenant de 1 à 10 atomes de carbone ;
- x' est un entier égal à 1 ou 2 ;
- y' est un entier égal à 0, 1 ou 2 ;
- la somme de x' et y' étant au maximum égal à 3.

De préférence, X¹ est un groupe OR²¹ tel que défini ci-dessus.

Le groupe R¹⁹ peut être, par exemple, un groupe alkylène, linéaire ou ramifié, comprenant de 1 à 30 atomes de carbone, de préférence de 1 à 10 atomes de carbone. Comme exemples de tels groupes, on peut citer le méthylène, l'éthylène, le propylène, le n-butylène, l'isobutylène, l'hexylène, le 2-éthylhexylène, le n-octylène, le décylène.

Le groupe R¹⁹ peut être également un groupe arylène comprenant de 6 à 20 atomes de carbone, tel que le phénylène ou le naphtylène.

Enfin, le groupe R¹⁹ peut être un groupe alkarylène tels que le xylylène, le tolylène ; un groupe cycloalkylène comprenant de 4 à 20 atomes de carbone tels que le cyclopentylène, le cyclohexylène, le cyclobutylène ; un groupe aralkylène tels que le 2-phénylpropylène, le phényléthylène, le benzylène.

De préférence, le groupe R¹⁹ est un groupe alkylène comprenant de 1 à 10 atomes de carbone.

Le groupe R²⁰ peut être un groupe alkyle, linéaire ou ramifié, comprenant de 1 à 30 atomes de carbone, tels qu'un groupe méthyle, éthyle, propyle, isopropyle, butyle, octyle, 2-éthylhexyle, octadécyle. Le groupe R²⁰ peut être également un groupe cycloalkyle comprenant de 3 à 20 atomes de carbone, tels que le groupe cyclopentyle, le groupe cyclohexyle. Le groupe R²⁰ peut être aussi un groupe aryle comprenant de 5 à 20 atomes de carbone, tels que le groupe phényle, naphtyle, p-phénylphényle ; un groupe alkaryle tel qu'un groupe tolyle ou xylènyle ; un groupe aralkyle tel qu'un groupe benzyle, un groupe phényléthyle, naphtylbutyle.

De préférence, R²⁰ est un groupe alkyle, linéaire ou ramifié, comprenant de 1 à 10 atomes de carbone, ou un groupe phényle.

De préférence, l'on utilise selon l'invention des composés mercaptoorganosilanes répondant à la formule suivante :

(HS-R²²)Si(OR²¹)₃

dans laquelle R²¹ représente un groupe alkyle comprenant de 1 à 10 atomes de carbone et R²² représente un groupe alkylène comprenant de 1 à 10 atomes de carbone.

Un composé particulier répondant à la définition donnée ci-dessus est le 3-mercaptopropyl-triméthoxysilane HSCH₂CH₂CH₂Si(OCH₃)₃.

Le composé mercaptoorganosilane peut être ajouté, dans la solution sol-gel préparée précédemment, directement sous forme pure ou sous une forme diluée, de préférence dans un solvant organique identique à celui utilisée pour la préparation de la solution sol-gel de l'étape a).

Le composé mercaptoorganosilane est ajouté avantageusement dans la solution sol-gel préparée précédemment dans une proportion pouvant aller de 1 à 50 % en masse par rapport à la masse totale du (des) précurseur(s) moléculaire(s) de métal et/ou de métalloïde utilisés dans l'étape a), de préférence de 1 à 12%, et plus précisément égal à 5% en masse.

Ce composé mercaptoorganosilane a pour fonction d'assurer, lors du dépôt de la solution sol-gel obtenue à l'issue du procédé, une interaction forte entre la surface de dépôt, de préférence métallique, et la couche issue de la solution. Ce composé contribue notamment à renforcer la résistance à l'abrasion du matériau de revêtement obtenu après densification de la couche déposée.

La solution obtenue à l'issue de l'étape b) est amenée à subir selon l'invention une hydrolyse. Cette hydrolyse est généralement assurée par ajout à la solution d'une quantité contrôlée d'eau, de préférence, désionisée, et éventuellement acidifiée. Cette hydrolyse peut être assurée par ajout à la solution d'une solution comprenant le solvant utilisé dans l'étape a) et éventuellement l'étape b) et de l'eau, de préférence désionisée et éventuellement acidifiée.

L'homme du métier choisira de manière appropriée les conditions d'hydrolyse (quantité d'eau ajoutée, pH) en fonction de la nature et de la réactivité du ou des précurseurs moléculaires de métal et/ou de métalloïde.

Avantageusement, la quantité contrôlée d'eau à ajouter (que ce soit sous forme d'eau uniquement ou sous forme d'une solution telle que mentionnée ci-dessus) sera déterminée de manière à obtenir un taux d'hydrolyse allant de 0,1 à 15, le taux d'hydrolyse représentant le rapport molaire entre l'eau ajoutée et les précurseurs moléculaires présents dans la solution obtenue en a).

Cette étape est nécessaire pour assurer l'hydrolyse des précurseurs et du composé mercaptoorganosilane et ainsi former un réseau d'oxy-hydroxyde de silicium et de métal ou de métalloïde.

En particulier, lorsque la solution obtenue comprend un précurseur moléculaire de silicium, tel que le tétraéthylorthosilicate, et un composé mercaptoorganosilane, l'étape d'hydrolyse contrôlée sera réalisée, de préférence, par ajout d'une solution aqueuse acide HCl ou HNO₃, à un pH pouvant aller de 1 à 6, et avec un taux d'hydrolyse pouvant aller de 1 à 10.

Après l'hydrolyse, l'on ajoute, selon l'invention, à la solution sol-gel un ou plusieurs agents complexants choisis parmi les acides carboxyliques, les composés β-dicétones, les composés hydroxamates tels que définis ci-dessus.

Les acides carboxyliques répondent généralement selon l'invention à la formule R¹-COOH, dans laquelle R¹ représente un groupe alkyle, linéaire ou ramifié, comprenant de 1 à 30 atomes de carbone, de préférence de 1 à 10 atomes de carbone, ou un groupe phényle. Des exemples d'acides carboxyliques appropriés sont l'acide acétique, l'acide propionique, l'acide butyrique, l'acide valérique, l'acide iso-valérique, l'acide hexanoique, l'acide heptanoique, l'acide octanoique, l'acide nonanoique, l'acide décanoique, l'acide undécanoique, l'acide laurique, l'acide tridécanoique, l'acide myristique et l'acide lactique. De préférence, l'acide acétique sera choisi.

Les composés β-dicétones répondent généralement selon l'invention à la formule R²-CO-CH₂-CO-R³, dans laquelle R² et R³, identiques ou différents, représentent un groupe alkyle comprenant de 1 à 30 atomes de carbone ou un groupe phényle. Des exemples de composés β-dicétones appropriés sont l'acétylacétone et ses dérivés.

Comme exemples de composés hydroxamate, on peut citer l'acide acétohydroxamique.

Le ou les agents complexants sont ajoutés, avantageusement, en une proportion permettant d'obtenir un taux de complexation allant de 1 à 20, ce taux de complexation étant défini comme le rapport molaire entre le ou les agents complexants ajoutés et le ou les précurseurs moléculaires présents dans la solution a).

L'ajout de ces agents complexants a pour effet de stabiliser la solution sol-gel obtenue après hydrolyse.

La solution obtenue après ajout des agents complexants peut être, de manière facultative, diluée avec un solvant organique identique à celui utilisée dans l'étape a), ce qui peut contribuer encore à renforcer la stabilité de la solution sol-gel obtenue à l'issue du procédé de l'invention. Le taux de dilution peut s'échelonner de 1 à 5 % en masse.

Les solutions sol-gel obtenues à l'issue de cette étape sont limpides et transparentes et restent stables pendant au moins 4 mois, c'est-à-dire que, pendant cet intervalle, le revêtement issu de cette solution traitante présente les mêmes propriétés de protection qu'avec une solution traitante fraîchement synthétisée. Ces solutions sol-gel présentent l'avantage ainsi de pouvoir être utilisées pendant plusieurs mois.

Selon un mode de réalisation particulier de l'invention, lorsque le précurseur moléculaire est un précurseur de silicium, le procédé de l'invention comprend avantageusement les étapes suivantes :
- préparer une solution sol-gel par mise en contact d'un précurseur moléculaire de silicium, tel que le tétraéthylorthosilicate Si(OCH₂CH₃)₄ avec un solvant alcoolique aliphatique, tel que l'éthanol ;
- ajouter à la solution obtenue ci-dessus un composé mercaptoorganosilane, tel que le 3-mercaptopropyl-triméthoxysilane ;
- hydrolyser la solution obtenue ci-dessus par ajout d'une solution aqueuse acide, en une proportion telle que le taux d'hydrolyse se situe de 1 à 15, par exemple de 1 à 10, de préférence est égal 5 ;
- ajouter à la solution hydrolysée obtenue ci-dessus un agent complexant du type acide carboxylique, tel que l'acide acétique, en une proportion telle que le taux molaire de complexation se situe de 1 à 20, de préférence est égal à 4 ;
- diluer la solution complexée obtenue ci-dessus, par exemple à 4% en masse équivalent SiO₂, avec un solvant alcoolique identique à celui utilisée dans la première étape, ce solvant étant de préférence l'éthanol.

Les solutions sol-gel sont susceptibles, après dépôt sur un substrat, en particulier, métallique, tel qu'un substrat à base d'argent, et traitement de ladite solution déposée, de donner un matériau de revêtement qui présente les propriétés avantageuses suivantes :
- une bonne adhérence sur ladite surface ;
- une bonne résistance chimique vis-à-vis des polluants environnementaux, tels que les composés soufrés, et des agents de lavage classiquement utilisés pour nettoyer des surfaces, par exemple de miroir ;
- des propriétés optiques qui n'amoindrissent pas celles du substrat sous-jacent.

Ainsi, l'invention a également pour objet un procédé de préparation d'un matériau de revêtement à partir de ladite solution sol-gel préparée selon l'invention, lequel procédé comprend successivement les étapes suivantes :
- déposer sur un substrat au moins une couche d'une solution sol-gel telle que préparée selon le procédé décrit ci-dessus ;
- réticuler-densifier la ou lesdites couches déposées.

Ainsi, selon l'invention, la solution est déposée sur un substrat sous forme d'une ou plusieurs couches.

De préférence, le substrat est un substrat métallique, plus particulièrement un substrat à base d'argent.

Cette solution peut être déposée selon diverses techniques de dépôt, parmi lesquelles on peut citer :
- le trempage-retrait (connu sous la terminologie anglaise « dip-coating ») ;
- l'enduction centrifuge (connue sous la terminologie anglaise « spin-coating ») ;
- l'enduction laminaire (connue sous la terminologie anglaise « laminar-flow-coating ou meniscus coating ») ;
- la pulvérisation ou l'épandage (connue sous la terminologie anglaise « spray-coating ») ;
- l'engobage (connu sous la terminologie anglaise « slip coating») ;
- l'enduction au rouleau (connue sous la terminologie « roll to roll process ») ;
- l'enduction au pinceau (connue sous la terminologie anglaise « paint coating ») ;
- la sérigraphie (connue sous la terminologie anglaise « screen printing ») ;
- les techniques utilisant un couteau horizontal pour le dépôt (connue sous la terminologie anglaise « tape-coating »).

De préférence, la ou les couches de solution est (sont) déposée(s) par trempage-retrait ou enduction centrifuge.

Après dépôt, la couche de solution sol-gel est amenée à subir, selon l'invention, un traitement de réticulation-densification destiné à transformer ladite couche en un matériau oxyde comprenant notamment des liaisons -M-O-Si- et -Si-O-Si-, M répondant à la même définition que celle donnée ci-dessus.

Selon l'invention, cette étape de réticulation-densification peut être réalisée en particulier par un traitement thermique à température modérée, peu élevée, par exemple, de 100°C à 300°C, de préférence autour de 200°C, sous air ou sous gaz inerte (tel que de l'azote et/ou de l'argon, pendant une durée pouvant aller de 2 à 150 minutes, de préférence de 15 à 60 minutes, par exemple à 200°C pendant 30 minutes.

Cette étape de réticulation-densification peut être également réalisée par insolation aux rayons infrarouges. Les rayonnements permettent de chauffer la couche déposée à une température allant de 120 à 300°C, de préférence autour de 200°C, sous air et/ou sous gaz inerte. De préférence, le rayonnement infrarouge est maintenu pendant une durée allant de 2 à 150 minutes, de préférence de 12 à 60 minutes, par exemple à 200°C pendant 30 minutes. Cette technique, lorsqu'elle est utilisée avec un substrat en argent, tel qu'un miroir, présente l'avantage de ne pas engendrer d'élévation notable de température du substrat du fait des propriétés hautement réfléchissantes de l'argent dans le domaine spectral infrarouge.

Selon une variante de l'invention, l'étape de réticulation-densification peut être réalisée par une insolation aux rayons UV de la couche déposée, par exemple à une longueur d'onde allant de 180 à 350 nm. De manière pratique, l'insolation aux rayons UV s'effectue en soumettant la couche déposée au rayonnement d'une lampe UV, par exemple une lampe à vapeur de mercure ou lampe excimère. Ladite insolation aux UV est généralement réalisée avec une énergie allant de 5 à 10 J/cm², de préférence de 5 à 6 J/cm², pendant une durée allant de 10 secondes à 10 minutes, de préférence, de 30 secondes à 5 minutes.

Enfin, l'étape de réticulation-densification peut être réalisée par toute autre méthode de réticulation permettant d'effectuer la réticulation voulue à température ambiante ou à température modérée (c'est-à-dire une température inférieure à 300°C).

Des techniques de réticulation, tels que l'irradiation par un faisceau laser, par un faisceau d'électrons ou d'ions ou encore par énergie micro-ondes peuvent être également envisagées.

Notons que, avant dépôt de la solution sol-gel sur le substrat, ce dernier peut être avantageusement soumis à un traitement de surface destiné à améliorer l'adhésion de la couche de solution sol-gel au substrat.

Ce traitement de surface peut consister, par exemple, en un nettoyage de la surface avec une solution aqueuse acide, telle qu'une solution aqueuse comprenant de l'acide orthophosphorique suivie d'un rinçage et d'un séchage de ladite surface.

Une solution de traitement de surface efficace, notamment lorsque le substrat est un substrat à base d'argent est une solution aqueuse d'acide fort, tel qu'une solution d'acide orthophosphorique, à laquelle l'on ajoute du thiourée.

Le matériau de revêtement obtenu constitue avantageusement un matériau de protection pour des substrats métalliques, notamment à base d'argent, telles que les miroirs, permettant notamment une protection de celles-ci vis-à-vis des polluants environnementaux tout en préservant leurs propriétés optiques et présentant d'excellentes propriétés mécaniques, telles qu'une excellente résistance à l'abrasion. Ce matériau de revêtement se présente sous la forme d'un matériau solide présentant des liaisons M-O-Si et Si-O-Si et également des liaisons organiques Si-R-SH (issues du composé mercaptoorganosilane), ce matériau pouvant être ainsi qualifié de matériau hybride organique-inorganique. Les groupes Si-R-SH permettent notamment une excellente adhésion aux substrats métalliques.

Le substrat métallique, notamment à base d'argent, est revêtu en tout ou partie d'une couche en un matériau de revêtement tel que défini ci-dessus et à un miroir comprenant un tel substrat.

Pour ce type d'application, la couche en matériau de revêtement tel que défini ci-dessus présentera avantageusement une épaisseur pouvant aller de 10 à 500 nm, de préférence de 100 à 200 nm, par exemple de 150 nm.

Le matériau tel que défini ci-dessus est utilisé pour la protection d'un substrat à base d'argent, en particulier d'un miroir.

On précise que, par substrat à base d'argent, on entend généralement selon l'invention, un substrat de nature métallique, minéral ou organique, dont au moins une des faces est revêtue d'une couche d'argent, d'épaisseur pouvant aller de 0,1 µm à quelques centaines de micromètres ou encore un substrat en argent massif.

Les matériaux de revêtement de l'invention utilisés en tant que matériaux protecteurs d'une surface à base d'argent d'un miroir présentent les avantages suivants :
- un effet protecteur exceptionnel en atmosphère oxydante ;
- une bonne tenue au flux lumineux de lampes flashs d'éclairement ;
- une tenue mécanique définie par une résistance à l'abrasion « modérée » selon la norme US-MIL-A-A-113-C caractérisée par une absence de dommages de la couche en matériau de revêtement après 50 passages ;
- une adhésion définie par une résistance à l'arrachage selon la norme US-MIL-C-0675-C caractérisée par une absence de dommages de la couche en matériau de revêtement après l'arrachage d'un ruban adhésif normalisé ;
- une tenue chimique caractérisée par une résistance aux produits d'entretien courants aux acides, bases et aux solvants organiques (tels que l'acétone, l'éthanol).

Des matériaux particulièrement efficaces sont ceux fabriqués à partir d'une solution sol-gel obtenue par le procédé comprenant les étapes successives suivantes :
- préparer une solution sol-gel par mise en contact d'un précurseur moléculaire de silicium, tel que le tétraéthylorthosilicate Si(OCH₂CH₃)₄ avec un solvant alcoolique aliphatique, tel que l'éthanol ;
- ajouter à la solution obtenue ci-dessus un composé mercaptoorganosilane, tel que le 3-mercaptopropyl-triméthoxysilane ;
- hydrolyser la solution obtenue ci-dessus par ajout d'une solution aqueuse acide, en une proportion telle que le taux d'hydrolyse se situe de 1 à 15, de préférence de 3 à 10, de préférence encore est égal 5 ;

- ajouter à la solution hydrolysée obtenue ci-dessus un agent complexant du type acide carboxylique, tel que l'acide acétique, en une proportion telle que le taux de complexation se situe de 1 à 20, de préférence de 3 à 20, de préférence encore est égal à 4 ;
- diluer la solution complexée obtenue ci-dessus avec un solvant alcoolique identique à celui utilisée dans la première étape, ce solvant étant de préférence l'éthanol ;
- déposer ladite solution sol-gel sur un substrat ;
- faire subir un traitement de réticulation-densification à ladite solution sol-gel déposée pour donner un matériau à base de SiO₂.

L'invention va maintenant être décrite en référence à l'exemple suivant donné à titre illustratif et non limitatif.

### BRÈVE DESCRIPTION DES DESSINS

- La figure 1 est une vue en coupe longitudinale d'un substrat métallique revêtu sur une des faces d'une couche en un matériau de revêtement conforme à l'invention ;
- La figure 2 représente un graphique représentant la valeur de la réflexion spéculaire (R) à 8° en fonction de la longueur d'onde (λ) en nm pour un substrat en inox revêtu d'une couche en argent, elle-même revêtue d'une couche en matériau de revêtement selon l'invention ;

- La figure 3 représente un graphique représentant la valeur de la réflexion spéculaire moyenne relative (R') entre 400 et 1000 nm en fonction de la durée d'exposition dans un four UV-ozone (t) pour un substrat en inox revêtue d'une couche en argent, elle-même revêtue d'une couche en matériau de revêtement selon l'invention ;
- La figure 4 représente un graphique représentant la valeur de la réflexion spéculaire (R) à 8° en fonction de la longueur d'onde (λ) en nm et après 10 000 tirs de lampes flashes pour un substrat en inox revêtue d'une couche en argent, elle-même revêtue d'une couche en matériau de revêtement selon l'invention.

### EXPOSÉ DÉTAILLÉ DE MODES DE RÉALISATION PARTICULIERS

Cet exemple illustre la préparation d'un matériau de revêtement destiné à une surface argentée d'un réflecteur.

La préparation d'un tel matériau comprend :
- la préparation de la solution sol-gel précurseur du matériau et la préparation de surface de l'argenture ;
- le dépôt de ladite solution suivi d'un traitement de réticulation-densification.

### a) Préparation de la solution sol-gel précurseur du matériau

Dans un tricol, on place de tétraéthylorthosilicate Si(OCH₂CH₃)₄ dans de l'éthanol absolu, la proportion de tétraéthylorthosilicate étant de 51,3% en masse par rapport à la masse totale de la solution résultante. Cette solution est agitée jusqu'à dissolution du tétraéthylorthosilicate. Ensuite, on ajoute à la solution du 3-mercaptopropyl-triméthoxysilane HS-(CH₂)₃-Si(OCH₃)₃, la proportion de 3-mercaptopropyl-triméthoxysilane étant de 5% en masse par rapport à la masse de tétraéthylorthosilicate. La solution résultante est agitée durant 30 minutes. Lorsque le 3-mercaptopropyl-triméthoxysilane est complètement solubilisé dans la solution, on ajoute une solution comprenant une solution aqueuse d'acide chlorhydrique (pH=1) et de l'éthanol absolu dans les proportions 53,3/46,7, la quantité de la solution agitée étant déterminée de manière à avoir un taux d'hydrolyse de 5, ledit taux d'hydrolyse, correspondant au rapport du nombre de mole d'eau ajouté sur le nombre de mole de tétraorthosilicate. La solution hydrolysée est placée sous agitation magnétique pendant 3 heures, puis à température ambiante sans agitation pendant 21 heures. On ajoute de l'acide acétique, en une quantité permettant d'obtenir un taux de complexation de 4, ledit taux de complexation correspondant au rapport du nombre de mole d'acide acétique ajouté sur le nombre de moles de tétraéthylorthosilicate. Après 3 h d'agitation magnétique, la solution est diluée avec de l'éthanol absolu à environ 4% en masse d'équivalent SiO₂.

### b) Dépôt de la solution sol-gel sur un substrat à base d'argent

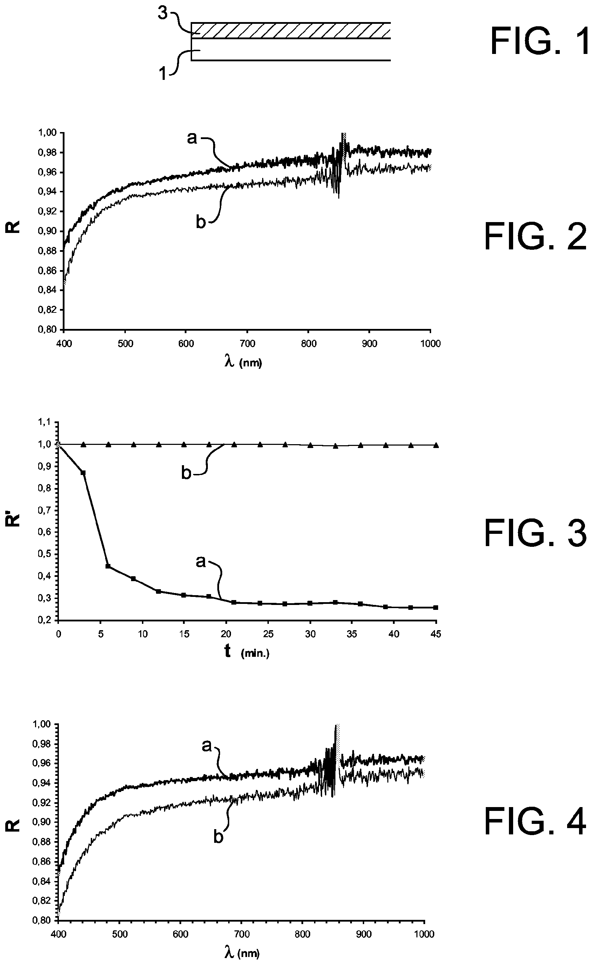

Le substrat de dépôt est un substrat métallique (référencé 1 sur la figure 1) en inox carré de 5 cm de côté et recouvert d'une couche d'argent d'épaisseur 10 µm fabriqué par galvanoplastie.

Avant dépôt, ce substrat est immergé pendant 2 minutes dans une solution de traitement de surface comprenant :
- une solution aqueuse d'acide orthophosphorique à 84% (H₃PO₄) ;
- 3,8 % en masse de thiourée H₂NCSNH₂ ;
- 0,5 % en masse de Triton*100.

Le substrat est ensuite retiré de la solution de traitement de surface, rincée abondamment avec de l'eau désionisée, puis séchée à l'éthanol absolu.

Ensuite, l'on procède au dépôt par trempage-retrait d'une couche de solution sol-gel dont la préparation est explicitée dans le paragraphe a) ci-dessus. Pour ce faire, le substrat est immergé dans la solution. Après une minute de stabilisation, le substrat est retiré de la solution avec une vitesse constante de retrait de 25 cm.min⁻¹ environ. Après deux minutes de séchage à température ambiante et pression atmosphérique, une couche homogène sol-gel recouvre la surface en argent du substrat en inox.

La couche de solution sol-gel ainsi obtenue est ensuite densifiée par une insolation aux rayonnements infrarouges sous air permettant de chauffer la couche recouvrant la surface en argent à 200°C pendant 30 minutes, à l'issue de laquelle l'on obtient une couche en un matériau de revêtement (référencée 3 sur la figure 1) présentant une épaisseur de 140 nm environ.

Le matériau de revêtement a fait l'objet d'analyses spectrales de manière à déterminer ses propriétés, les résultats de ces analyses étant consignés sur les figures 2 à 4.

Une première analyse, dont les résultats sont regroupés sur la figure 2, a consisté à mesurer les valeurs de réflexion spéculaire en fonction de la longueur d'onde respectivement pour :
- un substrat en inox tel que défini ci-dessus non revêtu d'un matériau de revêtement conforme à l'invention (courbe a sur la figure 2) ;
- un substrat en inox tel que défini ci-dessus revêtu d'un matériau de revêtement conforme à l'invention, dont la préparation est explicitée ci-dessus (courbe b sur la figure 2).

Il apparaît sur la figure 2 à la vue des courbes a) et b) une très faible perte de la réflexion spéculaire, ce qui démontre que la couche en matériau de revêtement de l'invention n'altère pas les propriétés de réflexion spéculaire de la surface en argent sous-jacente.

Ces résultats permettent de démontrer que les matériaux de revêtement de l'invention permettent de préserver les propriétés de réflexion spéculaire d'une surface en argent.

Une deuxième analyse, dont les résultats sont regroupés sur la figure 3, a consisté à mesurer, pour différentes longueurs d'onde allant de 400 à 1000 nm les valeurs de réflexion spéculaire à 8° en ambiance très corrosive dans un four UV-ozone respectivement pour :
- un substrat en inox tel que défini ci-dessus non revêtu d'un matériau de revêtement conforme à l'invention (courbe a sur la figure 3) ;
- un substrat en inox tel que défini ci-dessus revêtu d'un matériau de revêtement conforme à l'invention, dont la préparation est explicitée ci-dessus (courbe b sur la figure 3).

Il apparaît sur la figure 3, que pour le substrat en inox revêtu d'une couche en matériau de revêtement, la réflexion spéculaire moyenne relative n'est pas modifiée durant les 45 minutes d'exposition, tandis que, pour le substrat non revêtu d'un matériau de revêtement, la réflexion spéculaire moyenne relative diminue très fortement après 5 minutes d'exposition.

Ces résultats permettent de démontrer l'effet protecteur du matériau de revêtement conforme à l'invention dans des conditions de haute corrosivité.

Une troisième analyse, dont les résultats sont regroupés sur la figure 4, a consisté à mesurer, pour un substrat revêtu d'un matériau de revêtement conforme à l'invention, la réflexion spéculaire R en fonction de la longueur d'onde (λ) avant et après exposition au flux lumineux de lampes flashes (10 000 tirs avec une densité de flux de 25 kW.m⁻² dans le visible).

On observe que le substrat revêtu d'un matériau de revêtement conforme à l'invention (courbe b sur la figure) conserve un niveau de réflexion élevé après exposition et une très faible perte de réflexion par rapport au substrat non revêtu (courbe a sur la figure 4).

De plus, d'autres tests destinés à mettre en avant les propriétés de résistance chimique et les propriétés mécaniques des matériaux de revêtement de l'invention ont également été menés.

De ces tests, il ressort que les substrats revêtus d'un matériau de revêtement conforme à l'invention sont inertes aux acides forts, HCl 12M, à l'acide acétique pur, aux bases, NaOH 1M, à une solution ammoniacale à 28%, aux savons classiques et aux solvants organiques, tels que les alcools et l'acétone.

Il ressort également que les matériaux de revêtement conforme à l'invention résistent à la gomme de laboratoire et à l'arrachage au ruban adhésif. Ils ne sont également pas endommagés par le test « modéré » de la norme US-MIL-C-0675-C, c'est-à-dire après 50 passages avec une pression de 1 lb.

## Revendications

1. Procédé de préparation d'une solution sol-gel stable comprenant successivement les étapes suivantes :
a) préparer une solution sol-gel par mise en contact d'un ou plusieurs précurseurs moléculaires de métal et/ou de métalloïde avec un milieu comprenant un solvant organique;
b) ajouter à la solution obtenue en a) au moins un composé mercaptoorganosilane ;
c) hydrolyser la solution obtenue en b) ;
d) ajouter à la solution obtenue en c) un ou plusieurs agents complexants choisis parmi :
- les acides carboxyliques de formule R¹-COOH, dans laquelle R¹ représente un groupe alkyle, linéaire ou ramifié, comprenant de 1 à 30 atomes de carbone ou un groupe phényle ;
- les β-dicétones de formule R²-COCH₂CO-R³, dans laquelle R² et R³ représentent indépendamment un groupe alkyle, linéaire ou ramifié, comprenant de 1 à 30 atomes de carbone, ou un groupe phényle ;
- les hydroxamates de formule R⁴-CO-NHOH, dans laquelle R⁴ représente un groupe alkyle comprenant de 1 à 30 atomes de carbone ou un groupe phényle.

2. Procédé de préparation d'une solution sol-gel selon la revendication 1, dans lequel le précurseur moléculaire de métal est un précurseur moléculaire choisi parmi les précurseurs de métal de transition, de métal lanthanide, de métal post-transitionnel.

3. Procédé de préparation d'une solution sol-gel selon la revendication 2, dans lequel le métal de transition est choisi parmi Ti, V, Cr, Mn, Fe, Co, Ni, Cu, Zn, Y, Zr, Nb, Mo, Ru, Rh, Pd, Ag, Cd, Hf, Ta, W, Re, Os, Ir, Pt.

4. Procédé de préparation d'une solution sol-gel selon la revendication 2, dans lequel le métal lanthanide est choisi parmi La, Ce, Pr, Nd, Sm, Eu, Gd, Tb, Dy, Er, Yb.

5. Procédé de préparation d'une solution sol-gel selon la revendication 2, dans lequel le métal post-transitionnel est choisi parmi les éléments du groupe IIIA Al, Ga, In et Tl et les éléments du groupe IVA Ge, Sn et Pb.

6. Procédé de préparation d'une solution sol-gel selon la revendication 1, dans lequel le précurseur moléculaire de métalloïde est un précurseur moléculaire de silicium, de sélénium ou de tellure.

7. Procédé de préparation d'une solution sol-gel selon l'une quelconque des revendications 1 à 6, dans lequel le précurseur moléculaire de métal ou de métalloïde est un sel inorganique de métal ou de métalloïde.

8. Procédé de préparation d'une solution sol-gel selon l'une quelconque des revendications 1 à 6, dans lequel le précurseur moléculaire de métal ou de métalloïde est un composé organométallique de métal ou de métalloïde.

9. Procédé de préparation d'une solution sol-gel selon la revendication 8, dans lequel le composé organométallique de métal ou de métalloïde est un alcoxyde répondant à la formule (RO)ₙM, dans laquelle M désigne le métal ou le métalloïde, n représente le nombre de ligands liés à M, ce nombre correspondant également au degré d'oxydation de M et R représente un groupe alkyle, linéaire ou ramifié, pouvant comporter de 1 à 10 atomes de carbone, ou un groupe phényle.

10. Procédé de préparation d'une solution sol-gel selon la revendication 8, dans lequel le composé organométallique de métal ou de métalloïde répond à la formule suivante :
X_{y}R⁵_{z}M
dans laquelle :
- M représente un métal ou métalloïde ;
- X représente un groupe hydrolysable ;
- R⁵ représente un ligand issu :
* d'un composé carboxyle de formule R⁶-COOH avec R⁶ représentant un groupe alkyle, linéaire ou ramifié, comprenant de 1 à 30 atomes de carbone ou un groupe phényle ;
* d'un composé β-dicétone R⁷-CO-CH₂-CO-R⁸ avec R⁷ et R⁸, identiques ou différents, représentant un groupe alkyle, linéaire ou ramifié, comprenant de 1 à 30 atomes de carbone ou un groupe phényle ;
* d'un composé phosphonate de formules R⁹-PO(OH)₂, R¹⁰-PO(OR¹¹) (OH) ou R¹²-PO(OR¹³)(OR¹⁴) dans lesquelles R⁹, R¹⁰, R¹¹, R¹², R¹³ et R¹⁴ identiques ou différents, représentent un groupe alkyle, linéaire ou ramifié, comprenant de 1 à 30 atomes de carbone ou un groupe phényle ;
* d'un composé hydroxamate de formule R¹⁵-CO(NHOH) dans laquelle R¹⁵ représente un groupe alkyle, linéaire ou ramifié, comprenant de 1 à 30 atomes de carbone ou un groupe phényle ;
* d'un composé organosilane, d'un composé sulfonate, d'un composé borate ou d'un composé de formule HO-R¹⁶-OH, dans laquelle R¹⁶ représente un groupe alkylène, linéaire ou ramifié, comprenant de 1 à 30 atomes de carbone ou un groupe phénylène ;
- x et y étant des entiers positifs choisis de manière à ce que (x+y) soit égal à la valence de M.

11. Procédé de préparation d'une solution sol-gel stable selon la revendication 10, dans lequel le groupe hydrolysable X est un groupe halogène, un groupe acétate, un groupe acétonate, un groupe acrylate, un groupe acryloxy ou un groupe alcoolate OR' avec R' représentant un groupe alkyle, linéaire ou ramifié, comprenant de 1 à 10 atomes de carbone, ou un groupe phényle.

12. Procédé de préparation d'une solution sol-gel selon l'une quelconque des revendications 1 à 11, dans lequel le solvant organique mis en oeuvre dans l'étape a) est choisi parmi :
- les monoalcools aliphatiques ou aromatiques, saturés ou insaturés, de formule R¹⁷-OH, dans laquelle R¹⁷ représente un groupe alkyle, linéaire ou ramifié, comprenant de 1 à 30 atomes de carbone ou un groupe phényle ;
- les diols de formule HO-R¹⁸-OH, dans laquelle R¹⁸ représente un groupe alkylène, linéaire ou ramifié, comprenant de 1 à 30 atomes de carbone ou un groupe phénylène.

13. Procédé de préparation d'une solution sol-gel selon l'une quelconque des revendications 1 à 12, dans lequel le composé mercaptoorganosilane répond à la formule suivante :
(HS-R¹⁹)_{x'}SiR²⁰_{y}'X¹_{(4-x'-y')}
dans laquelle :
- R¹⁹ représente un groupe hydrocarboné divalent, linéaire ou ramifié, comprenant de 1 à 30 atomes de carbone ou un groupe phénylène ;
- R²⁰ représente un groupe hydrocarboné monovalent, linéaire ou ramifié, comprenant de 1 à 30 atomes de carbone ;
- X¹ représente un groupe hydrolysable choisi parmi un halogène, un acétonate, un acrylate, un alcoolate de formule OR²¹ dans laquelle R²¹ représente un groupe alkyle comprenant de 1 à 10 atomes de carbone ;
- x' est un entier égal à 1 ou 2 ;
- y' est un entier égal à 0, 1 ou 2 ;
- la somme de x' et y' étant au maximum égale à 3.

14. Procédé de préparation d'une solution sol-gel selon la revendication 13, dans lequel le composé mercaptoorganosilane répond à la formule suivante :
(HS-R²²)Si(OR²¹)₃
dans laquelle R²¹ représente un groupe alkyle comprenant de 1 à 10 atomes de carbone et R²² représente un groupe alkylène comprenant de 1 à 10 atomes de carbone.

15. Procédé de préparation d'une solution sol-gel selon l'une quelconque des revendications 1 à 14, dans lequel le composé mercaptoorganosilane est ajouté dans une proportion allant de 1 à 50 % en masse par rapport à la masse totale du (des) précurseur(s) moléculaire(s) de métal et/ou de métalloïde utilisés dans l'étape a).

16. Procédé de préparation d'une solution sol-gel selon l'une quelconque des revendications 1 à 15, dans lequel l'étape d'hydrolyse est réalisée par ajout d'une solution aqueuse ou d'une solution comprenant le solvant utilisée dans l'étape a) et de l'eau.

17. Procédé de préparation d'une solution sol-gel selon la revendication 16, dans lequel l'étape d'hydrolyse se déroule à pH acide.

18. Procédé de préparation d'une solution sol-gel selon la revendication 16 ou 17, dans lequel l'eau est ajoutée en une quantité déterminée de manière à obtenir un taux d'hydrolyse allant de 0,1 à 15, le taux d'hydrolyse représentant le rapport molaire entre l'eau ajoutée et le (les) précurseur(s) moléculaire(s) présents dans la solution obtenue en a).

19. Procédé de préparation d'une solution sol-gel selon l'une quelconque des revendications 1 à 18., dans lequel les acides carboxyliques sont choisis parmi l'acide acétique, l'acide propionique, l'acide butyrique, l'acide valérique, l'acide iso-valérique, l'acide hexanoique, l'acide heptanoique, l'acide octanoique, l'acide nonanoique, l'acide décanoique, l'acide undécanoique, l'acide laurique, l'acide tridécanoique, l'acide myristique et l'acide lactique.

20. Procédé de préparation d'une solution sol-gel selon l'une quelconque des revendications 1 à 18, dans lequel le composé β-dicétone est l'acétylacétone.

21. Procédé de préparation d'une solution sol-gel selon l'une quelconque des revendications 1 à 20, dans lequel le ou les agents complexants sont ajoutés en une proportion permettant d'obtenir un taux de complexation allant de 1 à 20, ce taux de complexation étant défini comme le rapport molaire entre le ou les agents complexants ajoutés et le ou les précurseurs moléculaires de l'étape a).

22. Procédé de préparation d'une solution sol-gel selon l'une quelconque des revendications 1 à 21, comprenant, en outre, après l'étape d), une étape de dilution avec un solvant organique identique à celui utilisé dans l'étape a).

23. Procédé de préparation d'une solution sol-gel selon la revendication 1, comprenant, lorsque le précurseur moléculaire est un précurseur de silicium, les étapes suivantes :
- préparer une solution sol-gel par mise en contact d'un précurseur moléculaire de silicium, tel que le tétraéthylorthosilicate Si(OCH₂CH₃)₄ avec un solvant alcoolique aliphatique, tel que l'éthanol;
- ajouter à la solution obtenue ci-dessus un composé mercaptoorganosilane, tel que le 3-mercaptopropyl-triméthoxysilane ;
- hydrolyser la solution obtenue ci-dessus par ajout d'une solution aqueuse acide, en une proportion telle que le taux d'hydrolyse se situe de 1 à 15;
- ajouter à la solution hydrolysée obtenue ci-dessus un agent complexant du type acide carboxylique, tel que l'acide acétique, en une proportion telle que le taux de complexation se situe de 1 à 20;
- diluer la solution complexée obtenue ci-dessus avec un solvant alcoolique aliphatique identique à celui utilisée dans la première étape.

24. Procédé de préparation d'un matériau de revêtement comprenant successivement les étapes suivantes :
- une étape de préparation d'une solution sol-gel par un procédé tel que défini selon l'une quelconque des revendications 1 à 23 ;
- déposer sur un substrat au moins une couche de ladite solution sol-gel ;
- réticuler-densifier la ou lesdites couches déposées.

25. Procédé de préparation d'un matériau de revêtement selon la revendication 24, dans lequel le substrat est un substrat métallique.

26. Procédé de préparation d'un matériau de revêtement selon la revendication 24, dans lequel le substrat métallique est à base d'argent.

27. Procédé de préparation d'un matériau de revêtement selon l'une quelconque des revendications 24 à 26, comprenant, en outre, avant l'étape de dépôt, une étape de traitement de surface du substrat comprenant le nettoyage de ce substrat par une solution aqueuse acide comprenant du thiourée.

28. Procédé de préparation d'un matériau de revêtement selon l'une quelconque des revendications 24 à 27, dans lequel le dépôt d'au moins un couche sur le substrat s'effectue par trempage-retrait, par enduction centrifuge ou par enduction laminaire.

29. Procédé de préparation d'un matériau de revêtement selon l'une quelconque des revendications 24 à 28, dans lequel l'étape de réticulation-densification est réalisée par un traitement thermique à une température allant de 100°C à 300°C.

30. Procédé de préparation d'un matériau de revêtement selon l'une quelconque des revendications 24 à 28, dans lequel l'étape de réticulation-densification est réalisée par insolation aux rayons infrarouges.

31. Procédé de préparation d'un matériau de revêtement selon l'une quelconque des revendications 24 à 28, dans lequel l'étape de réticulation-densification est réalisée par une insolation aux rayons UV.

## Patentansprüche

1. Verfahren zur Herstellung einer stabilen Sol-Gel-Lösung, umfassend nacheinander die folgenden Schritte:
a) Herstellen einer Sol-Gel-Lösung durch Inkontaktbringen von einem oder mehr molekularen Präkursoren aus Metall und/oder aus Metalloid mit einer Umgebung, die ein organisches Lösungsmittel umfasst;
b) Hinzufügen wenigstens einer Merkaptoorganosilanverbindung zu der in a) erhaltenen Lösung;
c) Hydrolisieren der in b) erhaltenen Lösung;
d) Hinzufügen, zu der in c) erhaltenen Lösung, von einem oder mehr Komplexbildnern, ausgewählt aus:
- den Carbonsäuren der Formel R¹-COOH, wobei R¹ eine lineare oder verzweigte Alkylgruppe repräsentiert, umfassend 1 bis 30 Kohlenstoffatome oder eine Phenylgruppe;
- den β-Diketonen der Formel R²-COCH₂CO-R³, wobei R² und R³ unabhängig voneinander eine lineare oder verzweigte Alkylgruppe repräsentieren, umfassend 1 bis 30 Kohlenstoffatome, oder eine Phenylgruppe;
- den Hydroxamaten der Formel R⁴-CO-NHOH, wobei R⁴ eine Alkylgruppe repräsentiert, umfassend 1 bis 30 Kohlenstoffatome oder eine Phenylgruppe.

2. Verfahren zur Herstellung einer Sol-Gel-Lösung nach Anspruch 1, wobei der molekulare Präkursor aus Metall ein molekularer Präkursor ist, der ausgewählt ist aus den Präkursoren aus Übergangsmetall, aus Lanthanidmetall, aus Post-Übergangsmetall.

3. Verfahren zur Herstellung einer Sol-Gel-Lösung nach Anspruch 2, wobei das Übergangsmetall ausgewählt ist aus Ti, V, Cr, Mn, Fe, Co, Ni, Cu, Zn, Y, Zr, Nb, Mo, Ru, Rh, Pd, Ag, Cd, Hf, Ta, W, Re, Os, Ir, Pt.

4. Verfahren zur Herstellung einer Sol-Gel-Lösung nach Anspruch 2, wobei das Lanthanidmetall ausgewählt ist aus La, Ce, Pr, Nd, Sm, Eu, Gd, Tb, Dy, Er, Yb.

5. Verfahren zur Herstellung einer Sol-Gel-Lösung nach Anspruch 2, wobei das Post-Übergangsmetall ausgewählt ist aus den Elementen der Gruppe IIIA Al, Ga, In und Tl, sowie den Elementen der Gruppe IVA Ge, Sn und Pb.

6. Verfahren zur Herstellung einer Sol-Gel-Lösung nach Anspruch 1, wobei der molekulare Präkursor aus Metalloid ein molekularer Präkursor aus Silicium, aus Selen oder aus Tellur ist.

7. Verfahren zur Herstellung einer Sol-Gel-Lösung nach einem der Ansprüche 1 bis 6, wobei der molekulare Präkursor aus Metall oder aus Metalloid ein anorganisches Metall- oder Metalloidsalz ist.

8. Verfahren zur Herstellung einer Sol-Gel-Lösung nach einem der Ansprüche 1 bis 6, wobei der molekulare Präkursor aus Metall oder Metalloid eine organometallische Metall- oder Metalloidverbindung ist.

9. Verfahren zur Herstellung einer Sol-Gel-Lösung nach Anspruch 8, wobei die organometallische Metall- oder Metalloidverbindung ein Alcoxyd ist, das der Formel (RO)ₙM genügt, wobei M das Metall oder das Metalloid bezeichnet, n die Zahl von Liganden repräsentiert, die mit M verbunden sind, wobei diese Zahl auch dem Oxidationsgrad von M entspricht, und R eine lineare oder verzweigte Alkylgruppe repräsentiert, die 1 bis 10 Kohlenstoffatome umfassen kann, oder eine Phenylgruppe.

10. Verfahren zur Herstellung einer Sol-Gel-Lösung nach Anspruch 8, wobei die organometallische Metall- oder Metalloidverbindung der folgenden Formel genügt:
X_{y}R⁵_{z}M
wobei:
- M ein Metall oder Metalloid repräsentiert;
- X eine hydrolisierbare Gruppe repräsentiert;
- R⁵ einen Liganden repräsentiert, hervorgegangen aus:
* einer Carboxylverbindung der Formel R⁶-COOH, wobei R⁶ eine lineare oder verzweigte Alkylgruppe repräsentiert, umfassend 1 bis 30 Kohlenstoffatome oder eine Phenylgruppe;
* einer β-Diketonverbindung R⁷-CO-CH₂-CO-R⁸, wobei R⁷ und R⁸, die identisch oder verschieden sind, eine lineare oder verzweigte Alkylgruppe repräsentieren, umfassend 1 bis 30 Kohlenstoffatome oder eine Phenylgruppe;
* einer Phosphonatverbindung der Formeln R⁹-PO(OH)₂, R¹⁰-PO(OR¹¹)(OH) oder R¹²-PO(OR¹³)(OR¹⁴), wobei R⁹, R¹⁰, R¹¹, R¹², R¹³ und R¹⁴, die identisch oder verschieden sind, eine lineare oder verzweigte Alkylgruppe repräsentieren, umfassend 1 bis 30 Kohlenstoffatome oder eine Phenylgruppe;
* einer Hydroxamatverbindung der Formel R¹⁵-CO(NHOH), wobei R¹⁵ eine lineare oder verzweigte Alkylgruppe repräsentiert, umfassend 1 bis 30 Kohlenstoffatome oder eine Phenylgruppe;
* einer Organosilanverbindung, einer Sulfonatverbindung, einer Boratverbindung oder einer Verbindung der Formel HO-R¹⁶-OH, wobei R¹⁶ eine lineare oder verzweigte Alkylengruppe repräsentiert, umfassend 1 bis 30 Kohlenstoffatome oder eine Phenylengruppe;
- wobei x und y positive ganze Zahlen sind, die derart gewählt sind, dass (x+y) gleich der Valenz von M ist.

11. Verfahren zur Herstellung einer stabilen Sol-Gel-Lösung nach Anspruch 10, wobei die hydrolisierbare Gruppe X eine Halogengruppe, eine Acetatgruppe, eine Acetonatgruppe, eine Acrylatgruppe, eine Acryloxygruppe oder eine Alkoholatgruppe OR' ist, wobei R' eine lineare oder verzweigte Alkylgruppe repräsentiert, umfassend 1 bis 10 Kohlenstoffatome oder eine Phenylgruppe.

12. Verfahren zur Herstellung einer Sol-Gel-Lösung nach einem der Ansprüche 1 bis 11, wobei das im Schritt a) verwendete organische Lösungsmittel ausgewählt ist aus:
- den aliphatischen oder aromatischen, gesättigten oder ungesättigten Monoalkoholen der Formel R¹⁷-OH, wobei R¹⁷ eine lineare oder verzweigte Alkylgruppe repräsentiert, umfassend 1 bis 30 Kohlenstoffatome oder eine Phenylgruppe;
- den Diolen der Formel HO-R¹⁸-OH, wobei R¹⁸ eine lineare oder verzweigte Alkylengruppe repräsentiert, umfassend 1 bis 30 Kohlenstoffatome oder eine Phenylengruppe.

13. Verfahren zur Herstellung einer Sol-Gel-Lösung nach einem der Ansprüche 1 bis 12, wobei die Merkaptoorganosilanverbindung der folgenden Formel genügt:
(HS-R¹⁹)_{x'}SiR²⁰_{y}'X¹_{(4-x'-y')}
wobei
- R¹⁹ eine lineare oder verzweigte divalente Hydrocarbongruppe repräsentiert, umfassend 1 bis 30 Kohlenstoffatome oder eine Phenylengruppe;
- R²⁰ eine lineare oder verzweigte monovaltente Hydrocarbongruppe repräsentiert, umfassend 1 bis 30 Kohlenstoffatome;
- X¹ eine hydrolisierbare Gruppe repräsentiert, die ausgewählt ist aus einem Halogen, einem Acetonat, einem Acrylat, einem Alkoholat der Formel OR²¹, wobei R²¹ eine Alkylgruppe repräsentiert, umfassend 1 bis 10 Kohlenstoffatome;
- x' eine ganze Zahl gleich 1 oder 2 ist;
- y' eine ganze Zahl gleich 0,1 oder 2 ist;
- die Summe von x' und y' höchstens gleich 3 ist.

14. Verfahren zur Herstellung einer Sol-Gel-Lösung nach Anspruch 13, wobei die Merkaptoorganosilanverbindung der folgenden Formel genügt:
(HS-R²²)Si(OR²¹)₃
wobei R²¹ eine Alkylgruppe repräsentiert, umfassend 1 bis 10 Kohlenstoffatome, und R²² eine Alkylengruppe repräsentiert, umfassend 1 bis 10 Kohlenstoffatome.

15. Verfahren zur Herstellung einer Sol-Gel-Lösung nach einem der Ansprüche 1 bis 14, wobei die Merkaptoorganosilanverbindung in einem Verhältnis hinzugefügt wird, das von 1 bis 50 Massen-% reicht, bezogen auf die Gesamtmasse des molekularen Präkursors/Präkursoren aus Metall und/oder aus Metalloid, die im Schritt a) verwendet werden.

16. Verfahren zur Herstellung einer Sol-Gel-Lösung nach einem der Ansprüche 1 bis 15, wobei der Hydrolyseschritt realisiert wird durch Hinzufügen einer wässrigen Lösung oder einer Lösung, die das im Schritt a) verwendete Lösungsmittel umfasst, und von Wasser.

17. Verfahren zur Herstellung einer Sol-Gel-Lösung nach Anspruch 16, wobei der Hydrolyseschritt bei saurem pH erfolgt.

18. Verfahren zur Herstellung einer Sol-Gel-Lösung nach Anspruch 16 oder 17, wobei das Wasser in einer bestimmten Menge derart hinzugefügt wird, dass ein Hydrolysegrad erhalten wird, die von 0,1 bis 15 reicht, wobei der Hydrolysegrad das molare Verhältnis repräsentiert zwischen dem hinzugefügten Wasser und dem/den molekularen Präkursor/Präkursoren, die in der a) erhaltenen Lösung vorhanden sind.

19. Verfahren zur Herstellung einer Sol-Gel-Lösung nach einem der Ansprüche 1 bis 18, wobei die Carbonsäuren ausgewählt sind aus Essigsäure, Propionsäure, Buttersäure, Valeriansäure, Isovaleriansäure, Hexansäure, Heptansäure, Oktansäure, Nonansäure, Dekansäure, Undekansäure, Laurinsäure, Tridecansäure, Myristinsäure und Milchsäure.

20. Verfahren zur Herstellung einer Sol-Gel-Lösung nach einem der Ansprüche 1 bis 18, wobei die β-Diketonverbindung Acetylaceton ist.

21. Verfahren zur Herstellung einer Sol-Gel-Lösung nach einem der Ansprüche 1 bis 20, wobei der oder die Komplexbildner in einem Anteil hinzugefügt wird/werden, der es erlaubt, einen Komplexierungsgrad zu erhalten, der von 1 bis 20 reicht, wobei dieser Komplexierungsgrad definiert ist als das molare Verhältnis zwischen dem oder den hinzugefügten Komplexbildnern und dem oder den molekularen Präkursoren des Schritts a).

22. Verfahren zur Herstellung einer Sol-Gel-Lösung nach einem der Ansprüche 1 bis 21, ferner umfassend nach dem Schritt d) einen Schritt der Verdünnung mit einem organischen Lösungsmittel, das mit dem im Schritt a) verwendeten identisch ist.

23. Verfahren zur Herstellung einer Sol-Gel-Lösung nach Anspruch 1, umfassend die folgenden Schritte, wenn der molekulare Präkursor ein Siliziumpräkursor ist:
- Herstellen einer Sol-Gel-Lösung durch Inkontaktbringen eines molekularen Präkursors aus Silizium wie zum Beispiel Tetraethylorthosilicat Si(OCH₂CH₃)₄ mit einem aliphatischen alkoholischen Lösungsmittel wie zum Beispiel Ethanol;
- Hinzufügen einer Merkaptoorganosilanverbindung wie zum Beispiel 3-Merkaptopropyl-Trimethoxysilan zu der vorstehend erhaltenen Lösung;
- Hydrolisieren der vorstehend erhaltenen Lösung durch Hinzufügen einer wässrigen sauren Lösung in einem Verhältnis derart, dass der Hydrolysegrad 1 bis 15 beträgt;
- Hinzufügen, zu der vorstehend erhaltenen hydrolisierten Lösung, eines Komplexbildners von Typ Carbonsäure wie zum Beispiel Essigsäure in einem Verhältnis derart, dass der Komplexierungsgrad von 1 bis 20 beträgt;
- Verdünnen der vorstehend erhaltenen komplexierten Lösung mit einem aliphatischen alkoholischen Lösungsmittel, das zu dem im ersten Schritt verwendeten identisch ist.

24. Verfahren zur Herstellung eines Beschichtungsmaterials, umfassend nacheinander die folgenden Schritte:
- einen Schritt der Herstellung einer Sol-Gel-Lösung mittels eines Verfahrens wie in einem der Ansprüche 1 bis 23 definiert;
- Aufbringen wenigstens einer Schicht aus der Sol-Gel-Lösung auf einem Substrat;
- Vernetzen-Verdichten der aufgebrachten Schicht(en).

25. Verfahren zur Herstellung eines Beschichtungsmaterials nach Anspruch 24, wobei das Substrat ein Metallsubstrat ist.

26. Verfahren zur Herstellung eines Beschichtungsmaterials nach Anspruch 24, wobei das Metallsubstrat auf Basis von Silber ist.

27. Verfahren zur Herstellung eines Beschichtungsmaterials nach einem der Ansprüche 24 bis 26, ferner umfassend vor dem Schritt des Aufbringens einen Schritt der Behandlung der Oberfläche des Substrats, umfassend die Reinigung dieses Substrats mit einer wässrigen sauren Lösung, die Thioharnstoff umfasst.

28. Verfahren zur Herstellung eines Beschichtungsmaterials nach einem der Ansprüche 24 bis 27, wobei das Aufbringen wenigstens einer Schicht auf dem Substrat durch Tauchziehen, durch Schleuderbeschichtung oder durch Laminarbeschichtung erfolgt.

29. Verfahren zur Herstellung eines Beschichtungsmaterials nach einem der Ansprüche 24 bis 28, wobei der Schritt des Vernetzens-Verdichtens durch eine thermische Behandlung bei einer Temperatur realisiert wird, die von 100°C bis 300°C reicht.

30. Verfahren zur Herstellung eines Beschichtungsmaterials nach einem der Ansprüche 24 bis 28, wobei der Schritt des Vernetzens-Verdichtens durch Bestrahlung mit Infrarotstrahlen realisiert wird.

31. Verfahren zur Herstellung eines Beschichtungsmaterials nach einem der Ansprüche 24 bis 28, bei dem der Schritt des Vernetzens-Verdichtens durch eine Bestrahlung mit UV-Strahlen realisiert wird.

## Claims

1. A process for preparing a stable sol-gel solution comprising, in succession, the following steps:
a) preparing a sol-gel solution by bringing one or more molecular metal and/or metalloid precursors into contact with a medium comprising an organic solvent;
b) adding at least one mercaptoorganosilane compound to the solution obtained in a);
c) hydrolyzing the solution obtained in b); and
d) adding, to the solution obtained in c), one or more complexing agents chosen from:
- carboxylic acids of formula R¹-COOH, in which R¹ represents a linear or branched alkyl group, comprising from 1 to 30 carbon atoms, or a phenyl group;
- β-diketones of formula R²-COCH₂CO-R³, in which R² and R³ independently represent a linear or branched alkyl group, comprising from 1 to 30 carbon atoms, or a phenyl group; and
- hydroxamates of formula R⁴-CO-NHOH, in which R⁴ represents an alkyl group comprising from 1 to 30 carbon atoms, or a phenyl group.

2. The process for preparing a sol-gel solution as claimed in claim 1, **characterized in that** the molecular metal precursor is a molecular precursor chosen from transition metal, lanthanide metal or post-transition metal precursors.

3. The process for preparing a sol-gel solution as claimed in claim 2, **characterized in that** the transition metal is chosen from Ti, V, Cr, Mn, Fe, Co, Ni, Cu, Zn, Y, Zr, Nb, Mo, Ru, Rh, Pd, Ag, Cd, Hf, Ta, W, Re, Os, Ir, Pt.

4. The process for preparing a sol-gel solution as claimed in claim 2, **characterized in that** the lanthanide metal is chosen from La, Ce, Pr, Nd, Sm, Eu, Gd, Tb, Dy, Er, Yb.

5. The process for preparing a sol-gel solution as claimed in claim 2, **characterized in that** the post-transition metal is chosen from the group IIIA elements Al, Ga, In and Tl and the group IVA elements Ge, Sn and Pb.

6. The process for preparing a sol-gel solution as claimed in claim 1, **characterized in that** the molecular metalloid precursor is a molecular precursor of silicon, selenium or tellurium.

7. The process for preparing a sol-gel solution as claimed in any one of claims 1 to 6, **characterized in that** the molecular metal or metalloid precursor is an inorganic metal or metalloid salt.

8. The process for preparing a sol-gel solution as claimed in any one of claims 1 to 6, **characterized in that** the molecular metal or metalloid precursor is an organometallic metal or metalloid compound.

9. The process for preparing a sol-gel solution as claimed in claim 8, **characterized in that** the organometallic metal or metalloid compound is an alkoxide corresponding to the formula (RO)ₙM, **characterized in that** M denotes the metal or metalloid, n represents the number of ligands linked to M, this number also corresponding to the degree of oxidation of M, and R represents a linear or branched alkyl group possibly comprising from 1 to 10 carbon atoms, or a phenyl group.

10. The process for preparing a sol-gel solution as claimed in claim 8, **characterized in that** the metal or metalloid organometallic compound corresponds to the following formula:
X_{y}R⁵_{z}M
in which:
- M represents a metal or metalloid;
- X represents a hydrolyzable group;
- R⁵ represents a ligand derived from:
* a carboxyl compound of formula R⁶-COOH with R⁶ representing a linear or branched alkyl group comprising from 1 to 30 carbon atoms or a phenyl group;
* a β-diketone compound R⁷-CO-CH₂-CO-R⁸ with R⁷ and R⁸, which are identical or different, representing a linear or branched alkyl group comprising from 1 to 30 carbon atoms, or a phenyl group;
* a phosphonate compound of formulae R⁹-PO(OH)₂, R¹⁰-PO(OR¹¹)(OH) or R¹²-PO(OR¹³)(OR¹⁴) in which R⁹, R¹⁰, R¹¹, R¹², R¹³ and R¹⁴, which are identical or different, represent a linear or branched alkyl group comprising from 1 to 30 carbon atoms or a phenyl group;
* a hydroxamate compound of formula R¹⁵-CO(NHOH) in which R¹⁵ represents a linear or branched alkyl group comprising from 1 to 30 carbon atoms or a phenyl group;
* an organosilane compound, a sulphonate compound, a borate compound or a compound of formula HO-R¹⁶-OH, in which R¹⁶ represents a linear or branched alkylene group comprising from 1 to 30 carbon atoms or a phenylene group; and
- x and y being positive integers chosen so that (x+y) is equal to the valency of M.

11. The process for preparing a stable sol-gel solution as claimed in claim 10, **characterized in that** the hydrolyzable group X is a halogen group, an acetate group, an acetonate group, an acrylate group, an acryloxy group or an alcoholate group OR' with R' representing a linear or branched alkyl group comprising from 1 to 10 carbon atoms, or a phenyl group.

12. The process for preparing a sol-gel solution as claimed in any one of claims 1 to 11, **characterized in that** the organic solvent used in step a) is chosen from:
- saturated or unsaturated, aliphatic or aromatic monoalcohols of formula R¹⁷-OH, in which R¹⁷ represents a linear or branched alkyl group comprising from 1 to 30 carbon atoms or a phenyl group; and
- diols of formula HO-R¹⁸-OH, in which R¹⁸ represents a linear or branched alkylene group comprising from 1 to 30 carbon atoms or a phenylene group.

13. The process for preparing a sol-gel solution as claimed in any one of claims 1 to 12, **characterized in that** the mercaptoorganosilane compound corresponds to the following formula:
(HS-R¹⁹)_{x'}SiR²⁰_{y'}X¹_{(4-x'-y'})
in which:
- R¹⁹ represents a linear or branched divalent hydrocarbon-based group comprising from 1 to 30 carbon atoms or a phenylene group;
- R²⁰ represents a linear or branched monovalent hydrocarbon-based group comprising from 1 to 30 carbon atoms;
- X¹ represents a hydrolyzable group chosen from a halogen, an acetonate, an acrylate, an alcoholate of formula OR²¹ in which R²¹ represents an alkyl group comprising from 1 to 10 carbon atoms;
- x' is an integer equal to 1 or 2;
- y' is an integer equal to 0, 1 or 2; and
- the sum of x' and y' being at the maximum equal to 3.

14. The process for preparing a sol-gel solution as claimed in claim 13, **characterized in that** the mercaptoorganosilane compound corresponds to the following formula:
(HS-R²²)Si(OR²¹)₃
in which R²¹ represents an alkyl group comprising from 1 to 10 carbon atoms and R²² represents an alkylene group comprising from 1 to 10 carbon atoms.

15. The process for preparing a sol-gel solution as claimed in any one of claims 1 to 14, **characterized in that** the mercaptoorganosilane compound is added in an amount ranging from 1 to 50% by weight relative to the total weight of the molecular metal and/or metalloid precursor(s) used in step a).

16. The process for preparing a sol-gel solution as claimed in any one of claims 1 to 15, **characterized in that** the hydrolysis step is carried out by addition of an aqueous solution or a solution comprising the solvent used in step a) and water.

17. The process for preparing a sol-gel solution as claimed in claim 16, **characterized in that** the hydrolysis step takes place at an acid pH.

18. The process for preparing a sol-gel solution as claimed in claim 16 or 17, **characterized in that** the water is added in an amount determined so as to obtain a degree of hydrolysis ranging from 0.1 to 15, the degree of hydrolysis representing the molar ratio between the water added and the molecular precursor(s) present in the solution obtained in a).

19. The process for preparing a sol-gel solution as claimed in any one of claims 1 to 18, **characterized in that** the carboxylic acids are chosen from acetic acid, propionic acid, butyric acid, valeric acid, isovaleric acid, hexanoic acid, heptanoic acid, octanoic acid, nonanoic acid, decanoic acid, undecanoic acid, lauric acid, tridecanoic acid, myristic acid and lactic acid.

20. The process for preparing a sol-gel solution as claimed in any one of claims 1 to 18, **characterized in that** the β-diketone compound is acetyl acetone.

21. The process for preparing a sol-gel solution as claimed in any one of claims 1 to 20, in which the complexing agent or agents are added in an amount that makes it possible to obtain a degree of complexation ranging from 1 to 20, this degree of complexation being defined as the molar ratio between the complexing agent or agents added and the molecular precursor or precursors from step a).

22. The process for preparing a sol-gel solution as claimed in any one of claims 1 to 21, comprising, in addition, after step d), a step of diluting with an organic solvent identical to that used in step a).

23. The process for preparing a sol-gel solution as claimed in claim 1, comprising, when the molecular precursor is a silicon precursor, the following steps:
- preparing a sol-gel solution by bringing a molecular silicon precursor, such as tetraethylorthosilicate Si(OCH₂CH₃)₄, into contact with an aliphatic alcoholic solvent, such as ethanol;
- adding to the solution obtained above a mercaptoorganosilane compound, such as (3-mercaptopropyl)trimethoxysilane;
- hydrolyzing the solution obtained above by adding an acidic aqueous solution, in an amount such that the degree of hydrolysis ranges from 1 to 15;
- adding to the hydrolyzed solution obtained above a complexing agent of the carboxylic acid type, such as acetic acid, in an amount such that the degree of complexation ranges from 1 to 20; and
- diluting the complexed solution obtained above with an aliphatic alcoholic solvent identical to that used in the first step.

24. A process for preparing a coating material comprising, in succession, the following steps:
- preparing a sol-gel solution according to the process defined in claims 1 to 23;
- depositing on a substrate at least one layer of said sol-gel solution;
- crosslinking/densifying said deposited layer or layers.

25. The process for preparing a coating material as claimed in claim 24, **characterized in that** the substrate is a metallic substrate.

26. The process for preparing a coating material as claimed in claim 24, **characterized in that** the metallic substrate is based on silver.

27. The process for preparing a coating material as claimed in any one of claims 24 to 26, comprising, in addition, before the deposition step, a step of surface-treating the substrate comprising cleaning this substrate with an acidic aqueous solution comprising thiourea.

28. The process for preparing a coating material as claimed in any one of claims 24 to 27, **characterized in that** the deposition of at least one layer on the substrate is carried out by dip coating, by spin coating or by laminar-flow coating.

29. The process for preparing a coating material as claimed in any one of claims 24 to 28, **characterized in that** the crosslinking/densifying step is carried out by a heat treatment at a temperature ranging from 100°C to 300°C.

30. The process for preparing a coating material as claimed in any one of claims 24 to 28, **characterized in that** the crosslinking/densifying step is carried out by exposure to infrared rays.

31. The process for preparing a coating material as claimed in any one of claims 24 to 28, **characterized in that** the crosslinking/densifying step is carried out by exposure to UV rays.
